# EUROPEAN PATENT APPLICATION

(11) **EP 1 376 420 A1**
(43) Date of publication of application: **02.01.2004**
(21) Application number: 02013566.1
(22) Date of filing: 19.06.2002
(51) Int. Cl.: G06F 17/60

(54) **Method and system for classifying electronic documents**

(71) Applicant: Errikos Pitsos, 81377 München (DE)
(72) Inventor: Errikos Pitsos, 81377 München (DE)
(74) Representative: Grünecker, Kinkeldey, Stockmair & Schwanhäusser Anwaltssozietät

(57) **Abstract**

A system and method of processing an electronic document in a system handling electronic documents in accordance with their classification into classes for electronic documents. The electronic document is supplemented with a classification tool, the classification tool allowing a recipient of the document to manually classify the electronic document as a document of a particular class. Then the supplemented electronic document is transmitted to the recipient. A classification information for the electronic document is provided to the system in response to an interaction of the recipient with the classification tool. The classification information representing the particular class associated to the interaction of the recipient.

## Description

The present invention generally relates to a method and system of classifying electronic documents and in particular to a user classification method and system for electronic mails.

With the growing availability of Internet services and the permanently increasing number of Internet service providers, the access to the Internet has become very simple. As the costs for computing devices and communications to the Internet decease, the number of participants using different applications using applications in the Internet becomes more important. Currently the Internet is used as an information and communication resource in providing services like the World Wide Web, Gopher or electronic messaging.

In the beginning, electronic messaging or accessing electronic documents has essentially been used by researchers to exchange information and know-how. At the present time, electronic messaging is no longer exclusive to researchers, but widely used by companies or private end users.

Electronic messaging applications and applications to access electronic documents are efficient and simple to use, so that even inexperienced end users may send and receive electronic messages.

One of the major problems of today's electronic messaging and accessing electronic documents users consist in the receipt of undesired electronic messages and documents and the undesired sending of electronic messages and documents. The receipt of undesired messages and documents comprises the receipt of unsolicited messages and documents, e.g. messages comprising advertisements or representing so called chain messages, the receipt of messages or documents comprising annexed files with undesired content, for instance pornographic pictures or videos, or the receipt of messages or documents comprising annexed files which are infected by a virus.

In the case of unsolicited messages, the end users are often bothered because they have to look at these messages, to determine that they are not desired and to delete them. This costs time and nerves and represents a constant nuisance for all end users that receive such messages. Furthermore, such unsolicited messages use up network bandwidth of today's networks and waste costs of several billions of US dollars each year.

In the case of viruses, the costs are also enormous. Viruses that are currently circulating in the Internet also waste bandwidth and further force companies and end users to buy expenses security services to be protected from such viruses. A computing device that has been infected by a virus may be greatly damaged and in the worst case, the virus many not only destroy the complete data comprises on the computer system, but be propagated to other devices and propagate private information to other devices. Such viruses that automatically propagate themselves to other computing devices are called worms.

Computer worms may use electronic address books that are resident on the computing device that they infect or measure the electronic message traffic on such computing devices to determine electronic addresses of end users, to which they may propagate themselves. Such worms may be difficult to recognize as they may also use their own electronic messaging client so that outgoing messages sent by the worm would not be visible to the corresponding end user as they will not appear in the outbox of the electronic messaging software client of the infected computing device. Thus, end users may even not be aware that their computing device has been infected by a computer virus or worm.

Worms are in general vary annoying to end users, as they may send out private data of other end user or, in the case of a company, secret data that is not destined to the users on the outside of this company.

The US patent 6,161,130 discloses a system for detecting electronic mail messages, which a given recipient is likely to consider "junk", in an incoming message stream. The system discriminates message contents for that recipient, through a probabilistic classifier, which is trained on prior content classifications. Through a resulting quantitative probability measure, which is produced by the classifier for each message and subsequently compared against a predefined threshold, that message is classified easier as a spam or legitimate mail and then stored in a corresponding folder for subsequent retrieval by and display to the recipient. This system however requires a training phase for each recipient and thus is particularly complicated to handle in its initial setup.

In view of the above problems, it is the object of the present invention to provide an improved method and system for classification of electronic documents, which provides for a fast setup of the system in a new environment.

This object is solved by the subject-matters of the independent claims. The dependent claims describe preferred embodiments of the invention.

According to the present invention, an electronic document is supplemented with a classification tool, which allows a recipient of the electronic document to manually classify the electronic document as a document of a particular class. The supplemented electronic document is transmitted to the recipient. Subsequently, a classification information is received for the electronic document in response to an interaction of the recipient with the classification tool, wherein the classification information represents the particular class associated to the interaction of the recipient. The received classification information is then stored for enabling the system to handle a subsequent electronic document, which corresponds to the electronic document for which classification information is stored, in accordance with the classification information.

Such a method does not require a training phase and thus can be installed for additional participants easily. Moreover, since the method is not automatically adapted to a certain recipient, received classification information may not only be used for a single recipient, but even for a plurality of recipients.

In a preferred embodiment the recipient classifies the electronic document by activating an activatable portion of the classification tool, the activatable portion being associated to one of the possible document classes. The recipient hence can provide his selection, to which class the document shall belong to, in a way which is easy to understand. When the activation of the activatable portion of the classification tool, according to a further embodiment, moreover automatically triggers the transmission of the classification information, the recipient's selection process can be reduced to a single action of the recipient.

It is particularly advantageous to adapt the classification tool to be automatically displayed to the recipient together with the content of the electronic document. Thus, it can be avoided that the recipient has to switch between an e-mail software and a classification software. Moreover, the recipient does not have to perform any further action but the single activation for selecting the class for the electronic document.

According to a further embodiment of the method according to the invention the classification tool is formed by at least one link inserted into the electronic document. An activation of the at least one link identifies which class the recipient selected for the electronic document and further triggers the transmission of the corresponding classification information. This kind of classification tool is easy to understand in its behavior by the recipient and moreover simply to implement. Particularly, when using an HTML link such a classification tool typically will not require any adaptations to different recipient platforms or recipient mail systems.

According to a further advantageous embodiment of the present invention, bonus information are transmitted to a bonus manager, wherein the bonus information identifies a recipient and indicates that the recipient has classified the document. Thereby, for example an existing bonus system may be used to provide a bonus to the recipient.

As the method according to the invention relies on the classification of the recipients, each recipient has to be motivated to further classify received documents. When the bonus manager stores the received bonus data and provides a positive feedback to the recipient by performing a lottery, publishing a ranking of most actively participating recipients, refunding cash or products, the recipient is motivated to further participate in the system.

According to a further improved embodiment bonus data are supplemented to the electronic document before transmitting the supplemented electronic document to the recipient. The recipient's interaction with the classification tool then triggers the bonus data to be rendered for the recipient in order to provide an immediate positive feedback to the recipient. This method directly motivates the recipient when providing a classification for the system. Hence, an improved degree of participation is achieved.

In the following the invention will be described with reference to the Figures, which illustrate:
- Figure 1,: a system comprising a classification manager and an optional bonus manager;
- Figure 2,: an electronic document displayed by the recipient's mail system, including three classification links as a classification tool;
- Figure 3,: general components of a hardware unit forming e.g. the sender terminal, recipient terminal, classification manager or bonus manager;
- Figure 4,: functional units of the classification manager of Fig. 1;
- Figure 5,: a message preparation process as performed in the classification manager of Fig. 1;
- Figure 6,: an automatic classification process as performed in the classification manager of Fig. 1;
- Figure 7,: a more detailed view of the evaluation process as performed in the classification manager;
- Figure 8,: a process of evaluating a received classification result as performed in the classification manager.

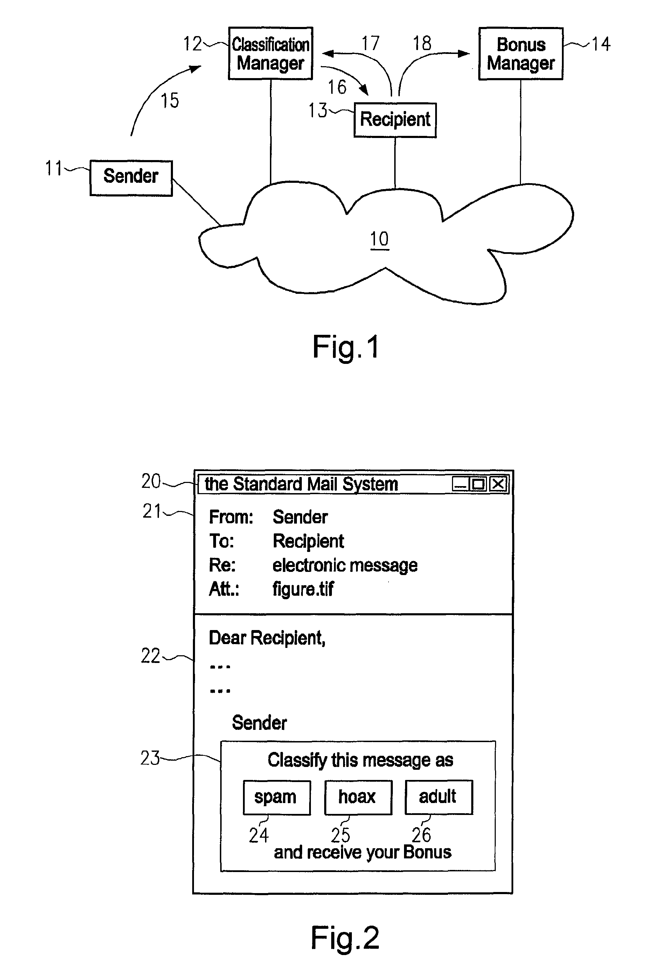

Figure 1 illustrates an embodiment of a system according to the invention and the general flow of information therein. In the system a sender unit 11, a classification manager 12, a recipient unit 13 and a bonus manager 14 are connected to the Internet 10. The recipient unit 13 may comprise an electronic message server and a recipient's terminal connected thereto. In the following, electronic messages or e-mails will also be referred to as messages.

The sender unit 11 sends an electronic message or e-mail 15 via the Internet 10 to the recipient unit 13. The e-mail 15 however is not directly transmitted to the recipient unit 13 but previously processed and prepared for transmission to the recipient unit 13 by the classification manager 12.

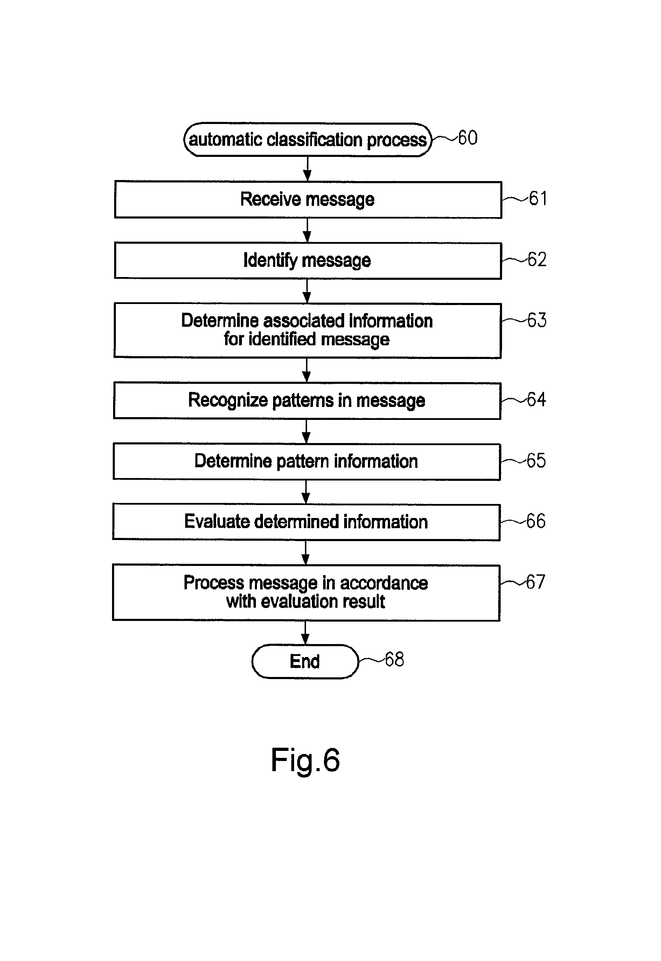

The steps of an e-mail preparation process 50 to 55, which may be performed in the classification manager, are illustrated in Figure 5. The electronic message is initially received in step 51 and afterwards supplemented with a classification tool in step 52. The classification tool enables the recipient to classify the received message as a message of a particular class of a plurality of message classes. Finally, in step 53 the message is forwarded to the recipient.

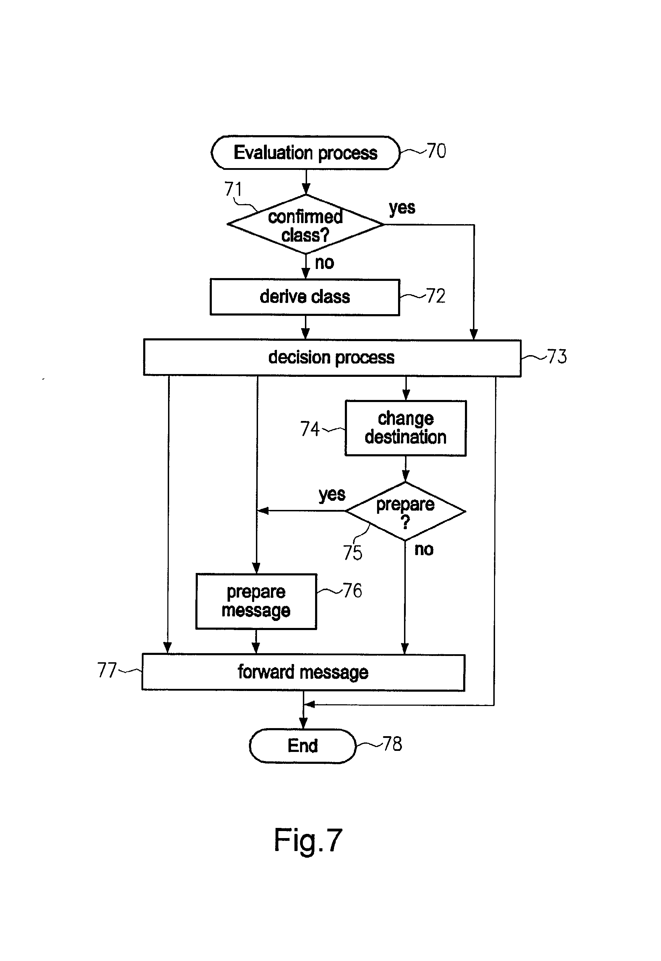

Further with regard to the classification manager 12, there will be described in more detail below an automatic e-mail classification process with reference to figures 6 and 7.

Turning now back to Figure 1, the message is transferred as a supplemented message 16 from the classification manager 12 to the recipient unit 13. The recipient reads the contents of the received message and interacts with the classification tool in order to select a particular class as a classification for the received message.

In response to the interaction a classification information 17 is transmitted from the recipient unit 13 to the classification manager 12. The classification information 17 will comprise an identifier for the electronic message 15 and indicate the particular class, which is associated to the recipient's interaction. Optionally only, but also triggered by the interaction, a bonus information 18 is transmitted to a bonus manager 14.

The classification manager 12 stores the received classification information 17, or at least the essential information derivable therefrom, in order to use this information when processing further electronic messages. In particular, when a subsequent electronic message is identified to correspond to the electronic message for which classification information is already stored, this subsequent message is handled in accordance with the class, which has been previously received for example for the identical electronic message. Hence, if a spam message has once been identified as a message of a spam class, a further transmission of the same message to any recipient can be avoided. Particularly the same message will not be transmitted to further recipients but instead terminated and not further processed.

As further illustrated in Figure 1, the recipient unit 13 may transmit the bonus information 18 to the bonus manager 14. The bonus manager 14 may be a part of an independent bonus system which allows the recipient to collect bonus points by classifying electronic messages. Such an independent bonus system of the bonus manager 14 also can be used for other products or services which may for example be not even related to the Internet. The bonus system typically provides a refund in cash or in the form of products in accordance with the recipient's choice of a list of possible forms how to receive a bonus. However, the bonus manager 14 may as well be at least partly integrated into the classification manager 12.

Figure 2, illustrates a view of an electronic message 20 as displayed to the recipient on a recipient's terminal by means of his electronic message software. The electronic message 20 comprises a header area 21, a content area 22 and a classification tool 23.

The head area 21 indicates that the electronic document 20, which was sent from the sender to the recipient, is related to the item "electronic message" and comprises an attached file "figure.tif", which forms a picture suitable for rendering on the recipient's terminal.

Within the content area 22 a message text as well as the classification tool 23 are displayed. The classification tool 23 is displayed together with the electronic message 20 in such a way that the recipient may immediately interact with the classification tool 23.

The classification tool 23 comprises three activatable areas or activatable portions 24, 25 and 26. Each of these activatable areas may be activated by the recipient in order to classify the received electronic message 20 as a message of a particular class. The first activatable area 24 is associated to a spam class, the second activatable area 25 to a hoax class and the third activatable area 26 to a adult matter class. An activation of one of the activatable areas 24 to 26 triggers the transmission of the corresponding classification information to the classification manager.

As apparent from the above and from the functions of the classification tool, the classification tool may be implemented by means of several techniques.

For example, the activatable areas of Fig. 2 may be formed by HTML-links. Such an HTML-Link may comprise an identifier of the message which is transferred to the link destination upon activation of the HTML-Link. Moreover, the class associated to the HTML-Link may be either transferred together with the identifier of the message, when using one link destination for all classes, or identified by the link destination, when using one link destination for each class.

Furthermore, the classification tool may as well be formed by a JAVA, ActiveX or script based software supplemented to the electronic message. In a window based operating system the classification tool does not even have to be displayed within the window of the message, but may as well be displayed to the recipient in a separate window. Preferably, the classification tool is simple in its design and small in the required amount of bytes, since they have to be additionally transferred to the recipient repeatedly. In most cases the classification tool is inserted into the message.

In case the electronic message is forwarded to a third party, the classification tool may be automatically deleted from or inactivated in the electronic message. A deletion or inactivation may also be performed in response to a classification input of the recipient, in order to avoid multiple classifications by the same recipient or multiple classifications of already classified and subsequently forwarded messages.

Examples for possible message classes are a spam message class, an unsolicited message class, a hoax message class, a virus message class, a chain message class, an adult matter class, a children matter class or further special interests classes such as a IT-related news class.

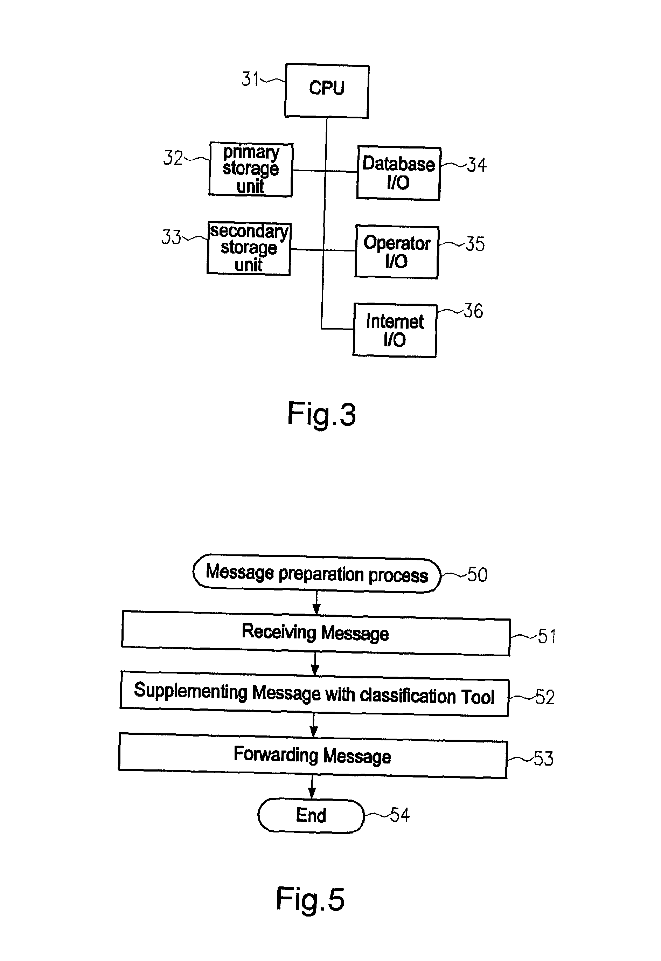

Figure 3 illustrates hardware components of the classification manager, the bonus manager, the sender unit or the recipient unit shown in Figure 1. However, below it will be referred to the classification manager only. Same may comprise a CPU 31, a primary storage unit 32 and a secondary storage unit 33. Furthermore, interface units 34 to 36 connect the classification manager to the Internet or databases and allow an operator to interact with the manager. The operator input/output unit 35 may comprise a display, a keyboard and a mouse. The primary storage unit may comprise RAM, EEPROM and ROM. The secondary storage unit 33 may be formed by a hard disk or an optical or magnetical disk drive.

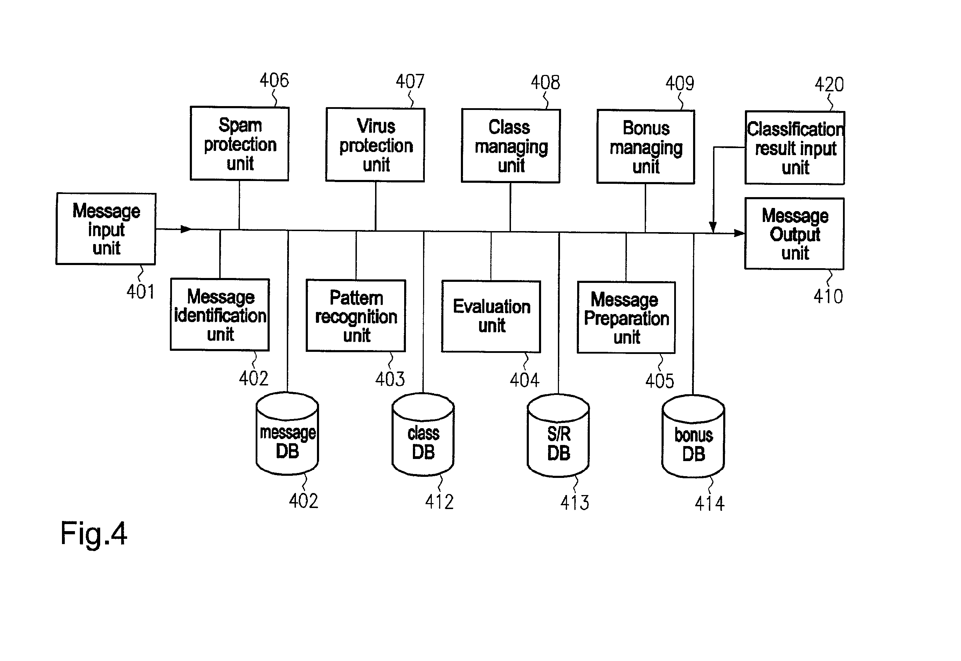

Functional units of a classification manager are illustrated in Figure 4.

A message input unit 401 receives incoming messages. After being supplemented with a classification tool in a message preparation unit 405, the supplemented message can be transmitted to the recipient via a message output unit 410.

A message identification unit 402, a pattern recognition unit 403 and an evaluation unit 404 are arranged in the classification manager to automatically classify a received message based on the information stored in a message database 411, a class database 412 and a sender/recipient database 413.

The sender/recipient's database 413 may comprise recipient preferences, for example indicating whether a recipient prefers not to receive messages from certain senders or to redirect private or advertising messages to a private mail account.

If a recipient classifies the received electronic message by means of the classification tool, the classification result is received at the classification result input 420.

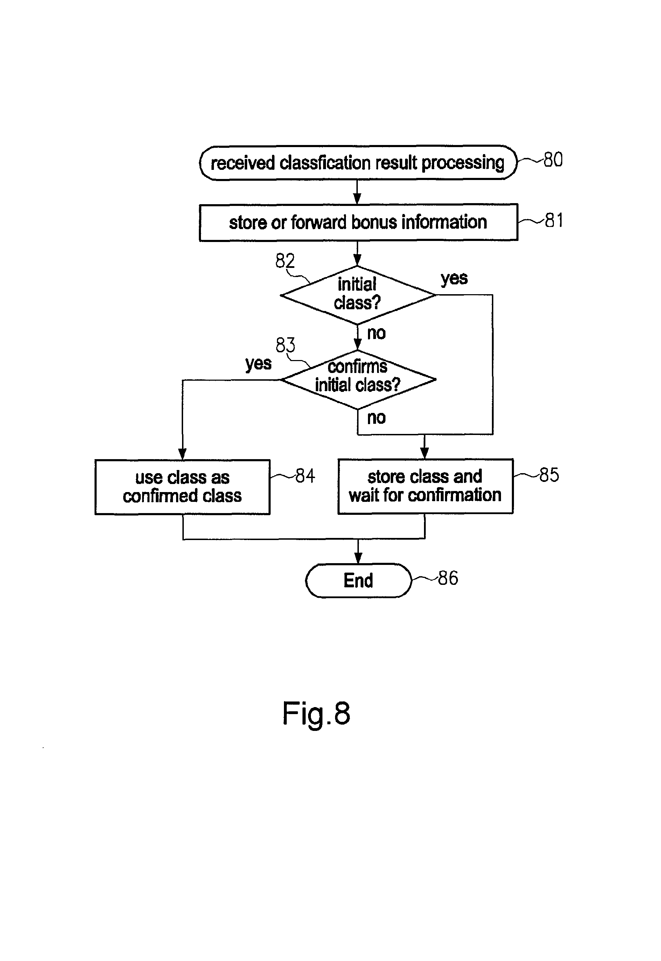

A class managing unit 408 controls the management of the received classes in the class database 412 in accordance with the process illustrated in more detail below with reference to Figure 8.

A bonus managing unit 409 and an bonus database 413 can be either additionally used or replace the bonus manager illustrated in Figure 1. Finally, a spam protection unit 406 and a virus protection unit 407 are integrated into the classification manager in order to enhance the systems capabilities.

As apparent and explained by way of examples below, the classification manager illustrated in Fig. 4 forms an embodiment comprising several optional units, which may as well be physically arranged separately.

A process 60 to 68 of an automatic classification performed in the classification manager of Figure 4 is illustrated in Figure 6.

The automatic classification process 60 to 68 starts with a step 61 of receiving of an electronic message. The received electronic message is identified in step 62. For identifying the message, the message identification unit for example compares the presently processed electronic message with electronic messages stored in the message database. In order to optimize the amount of data stored in this database, electronic messages may be identified by means of a structural profile and/or a content profile of the electronic message. Moreover, an electronic key signature, which is achieved by applying the electronic key to the electronic message, can be used for identifying electronic messages.

The identification of electronic messages can be further improved by not only identifying the message as a whole, but reducing the electronic message to its significant parts and identifying same. In particular, attachments to electronic messages may be identified separately.

In step 63 of Figure 6 associated information is determined for the identified electronic message. Hence, it is checked whether the class database comprises a class associated to successfully identified electronic message.

However, for an unknown electronic message, the data stored in the message database do not allow identification of the electronic message. Moreover, in cases where an electronic message is sent to a plurality of recipients, the message may already be stored in the message database without being manually classified by one of the recipients yet. In such cases and furthermore if the information derivable from a previously stored manual classification results is not sufficient to determine how to further process the electronic message, additional steps 64 and 65 are performed.

Based on information stored in the message database and/or the sender/receiver database and optionally supported by the spam protection unit and the virus protection unit, in a recognizing step 64 patterns within the electronic message are recognized. Information associated to the recognized patterns is determined in step 65.

Subsequently the determined pattern and classification information is evaluated in a further step 66. Finally, the electronic message is processed 67 in accordance with the evaluation result of step 66.

The steps of evaluating 66 determined information and processing 67 the message in accordance with the evaluation result are illustrated in more detail in Figure 7.

The evaluation process 70 to 78 initially checks in step 71 whether a confirmed class already exists for the electronic message. A confirmed class corresponds to a class stored in the class database, which is considered as a reliable classification of the electronic document. If there is a confirmed class the process continues with a step 73 of deciding how to further handle the message in accordance with the class.

If however, there is no confirmed class stored in the classification database, in a step 72 of deriving a class it is checked whether the electronic message can be associated to a class based on the determined pattern information. An unconfirmed class may form an input into the step 72 of deriving or estimating a class. For example, for an electronic document which has already been classified as a spam message by one recipient, the message will automatically be classified into a spam message class, only if further patterns in the message indicate that the message actually is a spam message. However, if the message does not comprise any patterns indicating that the message may be a spam message, the message will be further handled as an unclassified message or a message of a class of unclassified documents.

In the decision process 73, the derived or stored classes are used to decide whether a message shall be directly forwarded 77 to the recipient. A message may be directly forwarded for example if the message is a simple reply to a previous message of the recipient and if the sender is registered in regard to the recipient in the sender/recipient database.

In some cases it is required to re-direct the message, e.g. if the message is classified as a private message which consequently has to be redirected to a private mail account of the recipient. For these messages, the destination is changed in step 74 for thereafter checking in step 75 whether the message should be forwarded with or without a classification tool.

Messages which are unknown to the classification or which could not be sufficiently classified are supplemented with the classification tool in a step 76 of preparing the message.

Finally, as a result of the decision process 73, for example spam messages or hoax messages, may be terminated by continuing with the end 78 of the process 70 to 78 without performing the step 77 of forwarding the message.

The following alternatives for the processing of a message are not illustrated in Fig. 7. Particularly, unclassified messages e.g. based on their pattern information may assumed to be unwanted by recipients or a particular recipient.

Such a message may be intermediately stored for being transmitted to the recipient upon request only. For informing the recipient that an potentially unwanted message has been received and immediately stored, the classification manager forwards a list of intermediately stored messages for example weekly. However, in this regard a remote message folder of the recipient may as well be used, which can be frequently accessed by the recipient.

Alternatively, and in particular if the message is a potential spam message, the intermediately stored message will be transmitted to the recipient after the receipt of an approval to forward this message from the sender of the message.

Figure 8 illustrates a process 80 to 86 performed in the classification manager upon receipt of a classification result. Initially, in step 81 bonus information are either processed and/or stored in the classification manager or forwarded to the bonus manager.

If the received class forms the first manual classification result or initial class for an electronic message, the process branches in step 82 to a step 85 of storing the received class and waiting for a confirmation of this initial class. If a previous classification result is already stored in the classification manager, the previous class and the current class are compared in step 83. When both classes are equal and the previous class has been unconfirmed, the class is now used as a confirmed class. In a corresponding step 84 the state of the stored class will be changed. However, if the previous class does not correspond to the current class the current classification result is stored in step 85. Depending on the state of the previous class, same will be further used as an unconfirmed or confirmed class.

As already illustrated above in regard to the example of the bonus manager, which may be formed as a separate unit or as a combination of integrated units of the classification unit, several embodiments of the system according to the invention and thus the classification manager illustrated in Figure 4 are possible.

Some of the functional units of the classification manager 12 may be implemented in a local area network (LAN) of the recipient. Preferably, the automatic classification and the message preparation are performed locally in the recipient's LAN, whereas class management, bonus management and database functions are implemented in servers, which are not accessible for the user's of the local area network only, but for third parties as well.

For example, the message preparation unit 405 may be locally installed at a recipient's terminal or installed as an add-on to the recipient's local e-mail system in an e-mail server.

The above described methods and system approaches according to the invention depend on the interaction of the recipient. However, the recipient generally does not have any interest in providing classification information to a system. Therefore, the recipient will receive a bonus for a classification of an electronic message.

For example, the bonus manager 14 illustrated in Figure 1 may be a common bonus system which is used for several services and systems. The bonus manager receives bonus information comprising an identifier identifying the recipient and indicating that the recipient has performed a classification of an electronic message. If the recipient is a registered user of the bonus system, the bonus manager 14 will add a certain number of points to the recipient's account. Such bonus systems particular allow the users to choose whether they want to receive their bonus in form of cash or a product.

Further general possibilities to provide a bonus to the recipient are publication of a ranking of most actively participating recipients in the classification system or performing a lottery.

In a more advanced system which avoids an information flow between the recipient and the bonus manager, the bonus managing unit 409 illustrated in Figure 4 evaluates a received classification result and either transmits corresponding bonus information to the bonus manager or controls the storing of the bonus information in a bonus database 414. The bonus managing unit 409 may for example perform a lottery based on the stored bonus data in the bonus database 414.

Furthermore, the bonus managing unit 409 may increase or decrease a bonus for a received classification result based on the system internal value or the reliability of the received information. For example, a recipient will receive a high bonus value, when being the first recipient classifying a spam message. However, the bonus value may also be reduced in case a classification result instead of being confirmed is contradicted by classifications of further recipients of the same message.

The message preparation unit 405 may supplement the electronic message with the recipients individual rank within a ranking of participating recipients, in order to motivate the recipient to be more active. Furthermore, the classification manager can be adapted to increase the recipients motivation to classify a specific electronic message, if for example a second classification confirming a previously received classification is required to avoid further transmission of a plurality of identical mails. In such cases the classification tool will indicate to the recipient that he will receive an extra bonus when classifying this electronic message for which a classification is presently desired.

A further improvement is achieved when the recipient immediately receives a positive feedback after classifying an electronic document. Hence, the message preparation unit 405 may supplement bonus data to the electronic message, which can be rendered to the recipient. In this regard the classification tool is adapted to trigger the rendering of the bonus data to the recipient in case he has activated one of the activatable areas. The bonus data may for example comprise a joke which is displayed to the recipient as a text, picture or movie. The type of bonus data may be chosen at random or in accordance with the recipient's preferences. Such an immediate positive feedback may be used in addition or as a replacement for the above-described bonus systems.

## Claims

1. A method of processing an electronic document in a system handling electronic documents in accordance with their classification into classes for electronic documents, the method comprising:
supplementing the electronic document with a classification tool, the classification tool allowing a recipient of the document to manually classify the electronic document as a document of a particular class;
transmitting the supplemented electronic document to the recipient;
receiving a classification information for the electronic document in response to an interaction of the recipient with the classification tool, the classification information representing the particular class associated to the interaction of the recipient;
storing the received classification information, for enabling to handle a subsequent electronic document, which corresponds to the electronic document for which classification information is stored, in accordance with the stored classification information.

2. The method according to claim 1 **characterised in that** the recipient classifies the electronic document by activating an activatable portion of the classification tool, the activatable portion being associated to one of the possible documents classes.

3. The method according to claim 2 **characterised in that** the activation of the activatable portion of the classification tool automatically triggers the transmission of the classification information.

4. The method according to one of claims 1 to 3 **characterised in that** the classification information comprises the class selected for the electronic document and an identifier identifying the electronic document.

5. The method according to one of claims 1 to 4 **characterised by** storing document information for each of processed electronic documents, determining whether the stored document information of a processed document corresponds to the document information of a currently processed electronic document.

6. The method according to claim 5 **characterised in that** the stored document information comprises an electronic key signature, structural profile or content profile of the electronic document or at least a significant part thereof.

7. The method according to one of claims 1 to 6 **characterised in that** a group class is one of the possible document classes, which is used when a document is classified with respect to a specific group of recipients only.

8. The method according to one of claims 1 to 7 **characterised in that** the possible document classes comprise at least one of a spam document class, a unsolicited document class, a hoax document class, a virus/worm document class, a age rating class or special interest classes.

9. The method according to one of claims 1 to 7 **characterised in that** the classification tool is formed by at least one link inserted into the electronic document, an activiation of the at least one link identifies which class the recipient selected for the electronic document and triggers the transmission of the corresponding classification information.

10. The method according to one of claims 1 to 9 **characterised in that** the classification tool comprises one link for each possible document class.

11. The method according to one of claims 1 to 10 **characterised in that** the classification tool is adapted to be automatically displayed to the recipient together with the content of the electronic document.

12. The method according to one of claims 1 to 11 **characterised in that** bonus information are transmitted to a bonus manager, wherein the bonus information identify the recipient and indicate that he has classified the document.

13. The method according to claims 12 **characterised in that** the bonus manager stores the received bonus data and provides a positive feedback to the recipient by performing a lottery, publishing a ranking of most actively participating recipients, refunding cash or products.

14. The method according to one of claims 1 to 13 **characterised in that** bonus data are supplemented to the electronic document before transmitting the supplemented electronic document to the recipient, the recipient's interaction with the classification tool triggers the bonus data to be rendered for the recipient for providing an immediate positive feedback to the recipient.

15. The method according to one of claims 1 to 14 **characterised in that** depending on the stored classification information being relevant for the subsequent electronic document, the subsequent electronic document is terminated, redirected to another destination address or intermediately stored for being transmitted upon request of the recipient or approval of the electronic documents sender only.

16. A method of processing an electronic document in a system handling electronic documents in accordance with their classification into classes for electronic documents, the method comprising:
supplementing the electronic document with a classification tool, the classification tool allowing a recipient of the document to manually classify the electronic document as a document of a particular class;
transmitting the supplemented electronic document to the recipient;
receiving a bonus information in response to an interaction of the recipient with the classification tool, the bonus information identifying the recipient and indicating that he has performed an electronic document classification.

17. A method of processing an electronic document in a system handling electronic documents in accordance with their classification into classes for electronic documents, the method comprising:
supplementing the electronic document with a classification tool, the classification tool allowing a recipient of the document to manually classify the electronic document as a document of a particular class;
transmitting the supplemented electronic document to the recipient;
wherein a classification information for the electronic document can be provided in response to an interaction of the recipient with the classification tool, the classification information representing the particular class associated to the interaction of the recipient.

18. An electronic document preparation unit adapted to perform the method according to claim 17.

19. A classification manager unit adapted to perform the method according to one of claims 1 to 16.

20. A system adapted to perform the method according to one of claims 1 to 17.
